# DEMANDE DE BREVET EUROPEEN

(11) **EP 4 730 173 A1**
(43) Date de publication de la demande: **22.04.2026**
(21) Numéro de dépôt: 25209324.0
(22) Date de dépôt: 17.10.2025
(51) Int. Cl.: G06F 21/55, G06N 3/02, G06N 3/04, G06N 3/08, G06N 20/00, G06V 10/82, H04L 9/40, H04W 12/12, G06V 20/52

(54) **PROCÉDÉ DE CONCEPTION D'UN SYSTÈME DE DÉTECTION D'INTRUSION (IDS) DANS UN SYSTÈME EMBARQUÉ À BORD D'UN VÉHICULE AÉRONAUTIQUE, SPATIAL OU NAVAL**

(30) Priorité: 17.10.2024 FR 2411247
(71) Demandeur: THALES, 92190 Meudon (FR)
(72) Inventeur: DRUART, Kévin, 29200 BREST (FR); ESPES, David, 29200 BREST (FR); DETURCHE, Alain, 29200 BREST (FR); DEZAN, Catherine, 29200 BREST (FR)
(74) Mandataire: Lavoix

(57) **Abrégé**

Procédé de conception d'un système de détection d'intrusion (IDS) embarqué à bord d'un véhicule aéronautique, spatial ou naval, configuré pour réaliser au moins une mission déterminée par des valeurs de contraintes comprenant une valeur (VP) de puissance et une valeur (VT) de temps d'inférence du système (IDS), le système (IDS) comprenant l'embarquement d'algorithmes d'IA de classification, comprenant les étapes suivantes :
- première détermination (E1), par utilisation d'un algorithme d'optimisation, de l'architecture du système (IDS) comprenant au moins un module de décision (DM) et au moins un module de gestion (DMMS),
- deuxième détermination (E2), pour chaque module de décision (DM), par utilisation d'un algorithme d'optimisation, d'un arbre de routage du module de décision (DM), par mission, et
- troisième détermination (E3) d'au moins un module de gestion (DMMS).

## Description

La présente invention concerne un procédé de conception d'un système de détection d'intrusion (IDS) dans un système embarqué à bord d'un véhicule aéronautique, spatial ou naval.

L'invention s'adresse à des domaines utilisant des systèmes fortement contraints que l'on peut retrouver par exemple dans la lutte anti sous-marine ou encore la lutte antiaérienne. En généralisant, tous les domaines nécessitant la classification via un algorithme d'intelligence artificielle pourraient être concernés.

En pratique, le domaine principal est lié à la cybersécurité dans un environnement embarqué étant soumis à des contraintes énergétiques, de temps d'exécution, ou de ressources.

Les algorithmes de classifications peuvent être utilisés dans la détection d'anomalies employée dans les systèmes de détection d'intrusions (IDS), dans la reconnaissance d'objet, dans le traitement du langage naturel, évaluation de risque, analyse prédictive, prise de décision (pilotage drones, véhicules), maintenance prédictive, ou encore l'aide au diagnostic. Ces algorithmes sont déjà implémentés dans un certain nombre de domaines d'application, mais la difficulté réside dans leur utilisation sur des systèmes contraints. Il est important de minimiser un certain nombre de critères tels que la consommation énergétique, la bande passante utilisée, la vitesse de fonctionnement, la consommation en ressource pour laisser la possibilité de faire tourner d'autres algorithmes en parallèle sans devoir monopoliser une unité de calcul.

Dans les domaines techniques visés, nous sommes confrontés à un certain nombre de contraintes physiques liées aux matériels utilisés. En effet, les matériels utilisés sur les systèmes embarqués se doivent de respecter de strictes spécifications techniques. Bien souvent, des contraintes d'encombrement, d'énergie, de poids, induisant par conséquent une limitation en termes de ressources.

La problématique est donc l'implémentation d'algorithmes d'IA efficaces et efficients sur systèmes embarqués avec peu de ressources et/ou subissant des contraintes fortes (énergétique, ressources, bande passante, etc).

Ces algorithmes étant très lourds, ils sont très difficiles à implémenter. Pour résoudre cela il est connu d'utiliser des algorithmes plus légers, ou des techniques d'optimisation mais qui induisent une réduction des performances de classification et/ou une augmentation du temps d'inférence significative rendant impossible l'utilisation dans un système réel.

Pour pallier ce problème, il est proposé de nombreuses techniques pour adapter la phase d'inférence. Il est notamment connu deux principales sous catégories, la première consistant à optimiser et/ou raffiner un algorithme existant pour lui permettre de rentrer dans le cahier des charges des contraintes à respecter, et la seconde consistant à utiliser une architecture multi-modèles.

Ces deux catégories ajoutent néanmoins une certaine complexité au système, et bien qu'elles présentent de meilleurs compromis que les solutions plus classiques, elles ne permettent pas de résoudre le problème. En effet, certaines techniques comme les sorties anticipées, ou "early exits" en langue anglaise, présentent de nombreuses qualités mais ne suffisent pas, d'autres comme celles modifiant l'architecture mono-modèle par une architecture multi-modèles ne peuvent s'appliquer lorsque des informations à transmettre entre les modèles présentent une sensibilité et lorsque la bande passante nécessaire n'est pas disponible.

Il existe beaucoup de recherche sur les systèmes de détection d'intrusion d'acronyme IDS pour "Intrusion Detection System".

Il est connu des systèmes réalisant des compromis entre qualité de prédictions et ressources consommées, qui proposent notamment la minimisation des ressources et/ou la maximisation de la charge à analyser ce qui revient soit à une minimisation du temps d'inférence soit à une augmentation de la puissance matérielle, contre une baisse significative de la qualité des prédictions. Ils ne prennent pas ou peu en compte la situation extérieure, les contraintes qui sont susceptibles de changer tout au long de la mission. De plus, pour pouvoir intégrer à l'heure actuelle un algorithme de classification sur un système très contraint, il faut souvent réduire la taille du modèle ou devoir répartir le traitement en local et/ou dans le cloud pour obtenir des résultats tout juste satisfaisants pour un système précis.

Dans le cadre de la détection d'intrusion, les conséquences sont une baisse de qualité de prédictions, ce qui se caractérise par des attaques non détectées (la plupart des cas les moins représentées, comme les attaques les plus difficiles à détecter et les plus dangereuses) et/ou des faux-positifs qui font baisser la confiance qu'a l'opérateur dans les capacités du système de détection d'intrusion.

De surcroit, les métriques utilisées dans les solutions existantes ne peuvent pas être modifiées dynamiquement pendant la phase d'inférence. Il s'agit soit d'une fonction qui a été définie lors de la phase de préparation, soit de métriques fixes qui sont codées en dur avec des seuils fixes également. Enfin, lors de multi-exits, les conditions ne sont pas indépendantes. Ces limitations empêchent d'optimiser le modèle.

Un but de l'invention est de pallier les problèmes précédemment cités.

Il est proposé, selon un aspect de l'invention, un procédé de conception d'un système de détection d'intrusion embarqué à bord d'un véhicule aéronautique, spatial ou naval, configuré pour réaliser au moins une mission, une mission étant déterminée par des valeurs de contraintes opérationnelles comprenant une valeur de puissance utilisée par le système, et une valeur de temps d'inférence du système, le système de détection d'intrusion comprenant l'embarquement d'une pluralité d'algorithmes d'IA de classification, comprenant :
- une première étape de détermination, par utilisation d'un algorithme d'optimisation, de l'architecture du système (IDS) comprenant au moins un module de décision (DM) et au moins un module de gestion (DMMS) du ou des modules de décision (DM), à partir :
   - des caractéristiques de la plateforme du système (IDS) comprenant des métriques internes ou externes au système (IDS), des ressources de la plateforme du système (IDS) ; des types d'attaques possibles sur le système (IDS) dépendant des protocoles de communications utilisés par la plateforme du système (IDS) ;
   - des types d'algorithmes d'IA de classification disponibles ; et
   - des contraintes opérationnelles comprenant une limite (LP) de puissance utilisée par le système (IDS) à ne pas dépasser, une limite (LT) de temps d'inférence du système (IDS), et un niveau de précision de classification du système (IDS) désiré ; et
- une deuxième étape de détermination, pour chaque module de décision (DM), par utilisation d'un algorithme d'optimisation, d'un arbre de routage du module de décision (DM), par mission à partir:
   - de l'architecture du système (IDS) déterminé à la première étape ;
   - des caractéristiques de la plateforme du système (IDS) comprenant des métriques internes ou externes au système (IDS), des ressources de la plateforme du système (IDS) ; des types d'attaques possibles sur le système (IDS) dépendant des protocoles de communications utilisés par la plateforme du système (IDS) ;
   - des intervalles de seuils de comparaisons comprenant un ensemble de valeurs discrètes à explorer (par exemple de 10% à 90% avec un pas de 5%) ; et
   - des valeurs de contraintes opérationnelles de la mission courante du véhicule comprenant une valeur (VP) de puissance utilisée par le système (IDS), et une valeur (VT) de temps d'inférence du système (IDS) ;
   un module de décision étant configuré pour stocker en mémoire l'arbre de routage de la mission courante ; et

- une troisième étape de détermination d'au moins un module de gestion (DMMS) du ou des modules de décision (DM), à partir de l'architecture du système (IDS), déterminé à la première étape configuré pour stocker en mémoire l'ensemble des arbres de décisions du ou des modules de décision (DM), et pour modifier l'arbre de routage du ou des modules de décision (DM) en cas de modification de la mission courante.

Dans un mode de mise en œuvre, un arbre de routage est configuré pour définir le routage d'un échantillon de signal reçu par le système vers une autre branche de l'algorithme de classification en cours d'exécution, vers l'entrée d'un autre desdits algorithmes d'IA de classification, ou vers la suite de l'algorithme de classification en cours d'exécution.

Selon un mode de mise en œuvre, une métrique interne au système de détection d'intrusion (IDS) appartient à la liste suivante : entropie de l'échantillon de signal, patience de l'échantillon de signal, budget temporel alloué au signal, confiance dans l'algorithme d'IA de classification courant, marge de l'algorithme d'IA de classification courant.

Dans un mode de mise en œuvre, une métrique externe au système de détection d'intrusion (IDS) appartient à la liste suivante : niveau de batterie (NB) du véhicule, limite (LP) de puissance utilisée par le système (IDS), limite (LR) d'utilisation de ressources du véhicule, paramètre représentatif du fonctionnement du véhicule, paramètre représentatif de l'environnement du véhicule

Selon un mode de mise en œuvre, au moins un module de gestion (DMMS) est interne au module de décision (DM).

Dans un mode de mise en œuvre, au moins un module de gestion (DMMS) est externe au module de décision (DM).

Selon un mode de mise en œuvre, le module de gestion (DMMS) externe audit au moins un module de décision (DM) est compris dans un module de calcul différent du module de calcul comprenant le module de décision (DM) comprenant le module de gestion (DMMS) interne.

Dans un mode de mise en œuvre, l'algorithme d'optimisation est un algorithme génétique.

L'invention sera mieux comprise à l'étude de quelques modes de réalisation décrits à titre d'exemples nullement limitatifs et illustrés par les dessins annexés sur lesquels :

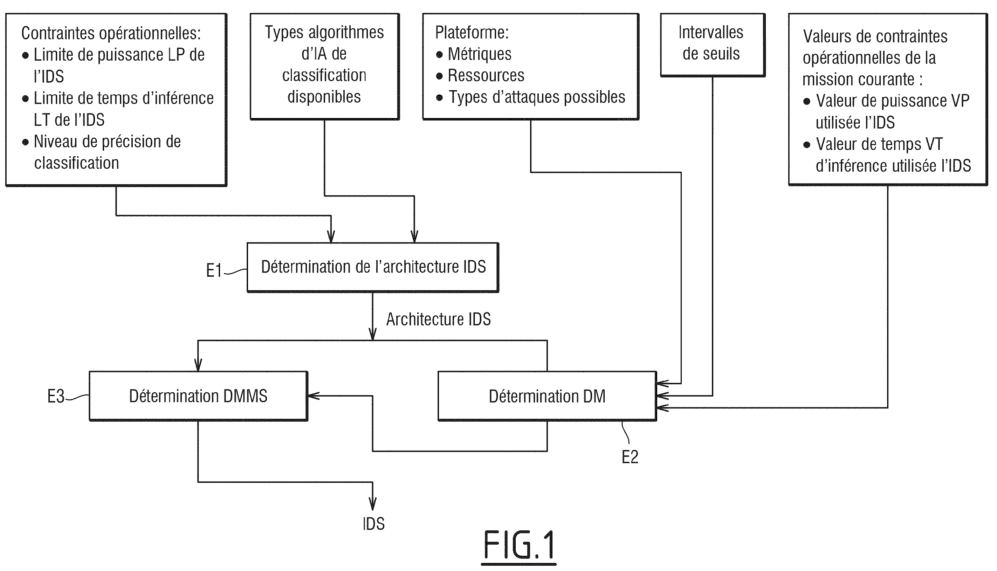

[Fig.1] illustre schématiquement un procédé de conception d'un système de détection d'intrusion dans un système embarqué à bord d'un véhicule aéronautique, spatial ou naval, selon un aspect de l'invention ;

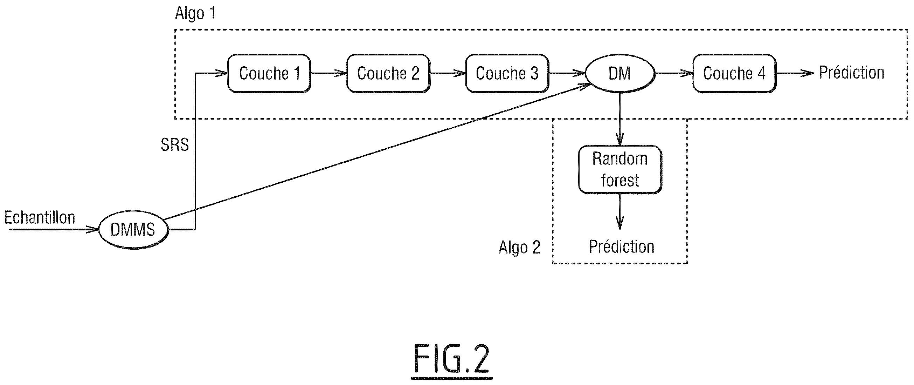

[Fig.2] illustre schématiquement un exemple de système de détection d'intrusion IDS conçu par le procédé de la [Fig.1], avec un module de décision DM, un module de gestion DMMS du module de décision DM, et deux algorithmes d'IA de classification différents, selon un aspect de l'invention ;

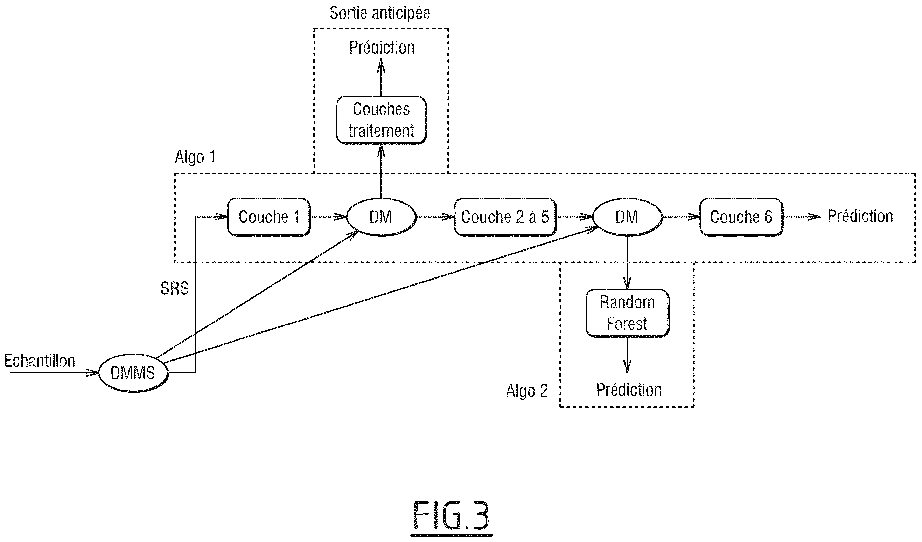

[Fig.3] illustre schématiquement un exemple de système de détection d'intrusion IDS conçu par le procédé de la [Fig.1], avec deux modules de décision DM, un module de gestion DMMS des modules de décision DM, et deux algorithmes d'IA de classification différents, et une sortie anticipée du premier algorithme, selon un aspect de l'invention ; et

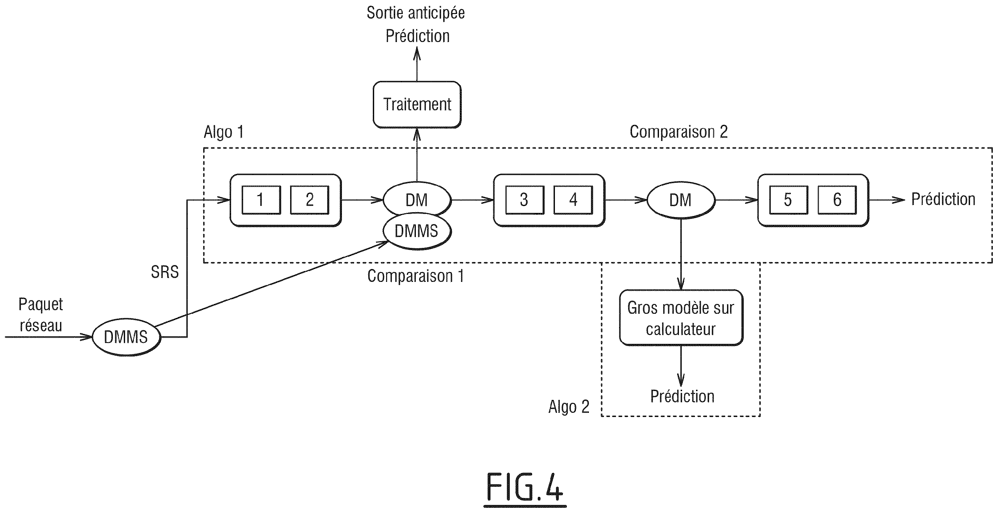

[Fig.4] illustre schématiquement un exemple de système de détection d'intrusion IDS par le procédé de la [Fig.1], avec deux modules de décision DM, un module de gestion DMMS externe des modules de décision DM, un module de gestion DMMS interne d'un des modules de décision DM, et deux algorithmes d'IA de classification différents, et une sortie anticipée du premier algorithme, selon un aspect de l'invention.

Sur l'ensemble des figures les éléments ayant des références identiques sont similaires.

La [Fig.1] illustre schématiquement un procédé de conception d'un système de détection d'intrusion IDS embarqué à bord d'un véhicule aéronautique, spatial ou naval, configuré pour réaliser au moins une mission, une mission étant déterminée par des valeurs de contraintes opérationnelles comprenant une valeur VP de puissance utilisée par le système IDS, et une valeur VT de temps d'inférence du système IDS, selon un aspect de l'invention. Le système de détection d'intrusion IDS comprend l'embarquement d'une pluralité d'algorithmes d'IA de classification.

Le procédé de conception d'un système de détection d'intrusion IDS comprend :
- une première étape de détermination, par utilisation d'un algorithme d'optimisation, de l'architecture du système IDS comprenant au moins un module de décision DM et au moins un module de gestion DMMS du ou des modules de décision DM, à partir :
   - des caractéristiques de la plateforme du système IDS comprenant des métriques internes ou externes au système IDS, des ressources de la plateforme du système IDS ; des types d'attaques possibles sur le système IDS dépendant des protocoles de communications utilisés par la plateforme du système IDS ;
   - des types d'algorithmes d'IA de classification disponibles ; et
   - des contraintes opérationnelles comprenant une limite LP de puissance utilisée par le système IDS à ne pas dépasser, une limite LT de temps d'inférence du système IDS, et un niveau NP de précision de classification du système IDS désiré ; et
- une deuxième étape de détermination, pour chaque module de décision DM, par utilisation d'un algorithme génétique d'optimisation, d'un arbre de routage du module de décision DM, par mission à partir :
   - de l'architecture du système IDS déterminé à la première étape ;
   - des caractéristiques de la plateforme du système IDS comprenant des métriques internes ou externes au système IDS, des ressources de la plateforme du système IDS, des types d'attaques possibles sur le système IDS dépendant des protocoles de communications utilisés par la plateforme du système IDS ;
   - des intervalles de seuils de comparaisons comprenant un ensemble de valeurs discrètes à explorer (par exemple de 10% à 90% avec un pas de 5%); et
   - des valeurs de contraintes opérationnelles de la mission courante du véhicule comprenant une valeur VP de puissance utilisée par le système IDS, et une valeur VT de temps d'inférence du système IDS ;
   un module de décision DM étant configuré pour stocker en mémoire l'arbre de routage de la mission courante ; et
- une troisième étape de détermination d'au moins un module de gestion DMMS du ou des modules de décision DM, à partir de l'architecture du système IDS, déterminée à la première étape configuré pour stocker en mémoire l'ensemble des arbres de décisions du ou des modules de décision DM, et pour modifier l'arbre de routage du ou des modules de décision DM en cas de modification de la mission courante.

Sur l'exemple décrit, on utilise un algorithme d'optimisation génétique, car ce type d'algorithme est particulièrement efficace en cas d'espaces de recherche vastes et complexes, et peut s'adapter aux changements du problème, ce qui les rend adaptés aux applications dynamiques et en temps réel. Ce type d'algorithme est moins susceptible de rester coincé dans des optima locaux par rapport aux méthodes d'optimisation traditionnelles, grâce à leur utilisation d'opérations de croisement et de mutation, et peut être appliqué à un large éventail de problèmes, notamment la planification, l'apprentissage automatique et même des tâches créatives telles que la génération artistique et musicale. En outre, ce type d'algorithme est facilement parallèlisable.

En variante, il est possible d'utiliser d'autres algorithmes d'optimisation, tels que (liste non exhaustive) :
- Optimisation linéaire en nombres entiers d'acronyme OLNE en langue française ou d'acronyme MILP pour "Mixed-Integer Linear Programming" en langue anglaise ;
- Algorithme d'optimisation bayésienne d'acronyme BOA pour "Bayesian Optimization Algorithm" en langue anglaise ;
- Optimisation par essaims particulaires d'acronyme OEP en langue française ou d'acronyme PSO pour "Particle Swarm Optimization" en langue anglaise ;
- Optimisation aléatoire d'acronyme RS pour "Random Search" en langue anglaise ;
- GridSearch en langue anglaise.

La détection d'anomalie par le système de détection d'intrusion IDS, est l'identification d'éléments ou d'évènements qui soulèvent des suspicions car ils diffèrent de manière significative de la majorité des autres données. Dans le cas des systèmes de détection d'intrusion IDS, ces cas sont potentiellement frauduleux et ont la volonté et/ou la capacité de nuire au système.

Une anomalie peut se qualifier comme un ou plusieurs signaux de données contenant des données à caractère frauduleux (re-jeu de séquences de commande non légitimes, envoi de mauvaises informations (ex : état du senseur erroné). Elle peut se caractériser par un signal envoyé par un utilisateur/module n'étant pas censé être en mesure d'envoyer ce flux de donnée en particulier.

La détection d'anomalie consiste à identifier des données qui ne suivent pas le comportement attendu ou normal. Une anomalie est une observation qui se distingue nettement des autres observations dans un ensemble de données. Ces anomalies peuvent indiquer des erreurs, des fraudes, des défaillances ou des événements rares et significatifs. On entend par niveau de précision NP souhaité un paramètre représentatif d'un niveau binaire ou multiclasse. Dans le cas d'un niveau binaire, il y a aura la détection d'une sortie déterminant s'il y a une attaque détectée ou une non-attaque. Dans le cas d'un niveau multiclasse, il peut y avoir la détection d'une sortie déterminant s'il y a brouillage, rejeu, infiltration, reconnaissance, ... c'est à dire un type d'attaque précise.

L'architecture du système de détection d'intrusion de l'IDS comprend des algorithmes d'IA de classification interconnectés par au moins un module de décision DM. Le rôle de la première étape E1 de détermination ou conception de l'architecture est, en se basant sur les entrées de cette étape, de déterminer la meilleure architecture. A la fin de cette première étape E1, le ou les module de décision DM agissent seulement comme des blocs d'interconnexion ou de liaison entre les algorithmes d'IA de classification, il n'y a aucune comparaison et aucun seuil de comparaison, et lorsque traversés par un échantillon, l'échantillon sort par toutes les sorties disponibles vers le ou les autres algorithmes d'IA de classification ou vers une sortie anticipée.

On entend par échantillon de signal, un signal réseau transitant dans un milieu matériel tels que les cartes de communication réseau, le support physique d'interconnexion, le routeur, qui est caractérisé par un protocole de communication dépendant de la plateforme d'implémentation (exemple public : TCP/IP, UDP, HTTP, IP, FTP). Chaque protocole comporte ses propres caractéristiques (dans un milieu OT ("Operation Technology") on peut retrouver des paquets contenant des commandes, des mises à jour de valeurs, alors que dans un système IT on pourra retrouver des données utilisateur).

Une cyber-attaque se caractérise par un transfert de blocs d'octets non prévu et/ou non autorisé dans le fonctionnement normal défini dans le cahier dans l'analyse fonctionnelle du système.

Chaque architecture respecte des contraintes et devra s'adapter à la plateforme (et donc adopter ses métriques, ressources, protocoles de communication). Chaque solution correspond à une architecture, et l'ensemble des solutions (espace de recherche) est le nombre total de combinaisons possible. A cette étape, le ou les modules de gestion DMMS sont également placés dans l'architecture mais sont vides, comme le ou les modules de décision DM, vides.

Un algorithme d'optimisation est utilisé pour explorer intelligemment l'espace de solution, c'est-à-dire que l'ensemble des solutions ne seront pas explorées. Un algorithme génétique est utilisé pour cette optimisation.

Un algorithme génétique dit générique peut être utilisé pour cette tâche et fonctionne selon les étapes suivantes :
- Initialisation : une population initiale de solutions potentielles est créée, souvent générées aléatoirement.
- Evaluation : chaque solution potentielle, ou individu, est évaluée pour déterminer sa qualité ou son aptitude à résoudre le problème.
- Sélection : les meilleures solutions sont sélectionnées pour la reproduction. Cette étape est analogue à la survie du plus apte dans la nature.
- Croisement : des paires de solutions sélectionnées sont combinées pour créer de nouvelles solutions, en espérant qu'elles héritent des bonnes caractéristiques de leurs parents (avec un seuil de croisement de 70%).
- Mutation : avec une petite probabilité (inférieure à un seuil généralement fixé à 1%), des changements aléatoires sont introduits dans les nouvelles solutions pour maintenir la diversité génétique et explorer de nouvelles régions de l'espace de recherche.
- Nouvelle génération : les nouvelles solutions remplacent les moins bonnes de la population précédente, et le processus se répète jusqu'à ce qu'une solution satisfaisante soit trouvée ou qu'un nombre prédéfini de générations soit atteint.

La deuxième étape E2 détermine, pour chaque module de décision DM, par utilisation d'un algorithme génétique d'optimisation, un arbre de routage du module de décision DM, par mission.

Lorsque la première étape E1 de détermination de l'architecture de l'IDS a été effectuée, l'arbre de routage des modules de décision doit être déterminé. De la même façon que pour la détermination E1 de l'architecture, un grand nombre de possibilité subsiste, et un algorithme d'optimisation est utilisé pour sélectionner le meilleur arbre qui répond à des contraintes de mission.

Le cas minimal est composé d'un DMMS (interne ou externe) et d'un DM. Alors, le positionnement du module de gestion DMMS dépend de son implémentation sur le véhicule. Dans le cas d'un véhicule utilisant plusieurs matériels de calculs (exemple SoC), le module de décision DM ainsi que l'algorithme d'inférence peut se situer sur une unité de calcul (processeur) tandis que le DMMS peut se situer sur un autre.

Dans un exemple plus précis avec un SoC FPGA Xilinx contenant 1 puce FPGA, un CPU ARM et un GPU AMD, les algorithmes d'IA de classification peuvent être configurés sur la partie FPGA, ainsi donc que les modules de décision DM, alors que le module de gestion DMMS peut se situer sur le processeur ARM plus haut niveau dans la chaine pour permettre l'analyse de trafic réseau pour ajout d'en tête dans les paquets pour la mise à jour des métriques et seuils auxquels ont accès les modules de décision DM plus bas dans la chaîne.

Dans cette deuxième étape E2, de détermination, pour chaque module de décision DM, d'un arbre de routage du module de décision DM, pour chaque mission du véhicule, un algorithme génétique d'optimisation prend en entrée : l'architecture du système IDS déterminé à la première étape E1 ; des caractéristiques de la plateforme du système IDS comprenant des métriques internes ou externes au système IDS, des ressources de la plateforme du système IDS, des types d'attaques possibles sur le système IDS dépendant des protocoles de communications utilisés par la plateforme du système IDS ; des intervalles de seuils de comparaisons comprenant un ensemble de valeurs discrètes à explorer (par exemple de 10% à 90% avec un pas de 5%) ; et des valeurs de contraintes opérationnelles de la mission courante du véhicule, comprenant une valeur VP de puissance utilisée par le système IDS, et une valeur VT de temps d'inférence du système IDS.

Un module de décision DM étant configuré pour stocker en mémoire l'arbre de routage de la mission courante.

Cette deuxième étape E2 de détermination du ou des modules de décision DM peut également être effectuée directement pendant la première étape E1 de conception de l'architecture.

L'algorithme d'optimisation permet d'obtenir la meilleure solution pour un ensemble de contraintes données, donc pour une mission précise. On peut donner pour exemple deux types de missions. Une première que l'on peut nommer mission 1, nécessite le traitement d'une quantité de données supérieure et donc implique un temps d'inférence plus faible pour l'IDS. Une seconde nommée mission 2, quant à elle, favorise la qualité des résultats quitte à perdre en rapidité de traitement. Pour chaque DM, on aura plusieurs "configurations" possibles qui dépendront de la mission (et donc des contraintes de mission).

Cette deuxième étape E2 de détermination du ou des modules de décision DM génère donc un arbre de routage par mission par module de décision (une mission étant caractérisée par un ensemble de contraintes de missions et de valeurs de métriques précises).

Pour un module de décision DM, on a donc un arbre de routage courant, stocké en mémoire du module de décision DM pour la mission courante ou en cours du système de détection d'intrusion de l'IDS et un certain nombre d'autres arbres en fonction des contraintes pouvant évoluer selon une évolution de mission.

La troisième étape E3 détermine ou conçoit au moins un module de gestion DMMS du ou des modules de décision DM, à partir de l'architecture du système IDS, déterminée à la première étape configuré pour stocker en mémoire l'ensemble des arbres de décisions du ou des modules de décision DM, et pour modifier l'arbre de routage du ou des modules de décision DM en cas de modification de la mission courante.

Le rôle d'un module de gestion DMMS est d'interagir avec le ou les modules de décision DM en fonction des conditions extérieures et/ou de la mission et ainsi de mettre à jour leur configuration partielle (juste les seuils), ou leur configuration totale (changer l'arbre de routage).

Il doit aussi créer la structure de données d'échange d'informations en analysant le flux des échantillons et en déterminant leur complexité (via un algorithme de dérive de modèle ou "concept drift" en langue anglaise).

Le nombre et la position du ou des modules de gestion DMMS est définie en fonction des métriques et de leur accès par la première étape E1 de détermination de l'architecture du système de détection d'intrusions IDS.

Un module de gestion DMMS contient donc un ensemble d'arbres de routage par module de décision DM et par mission. Il a également pour rôle la création de la structure de données d'échange d'informations pour celui placé entre les échantillons et système de détection d'intrusions IDS.

Durant cette troisième étape E3, un détecteur de dérive de modèle d'acronyme CDD pour "Concept Drift Detector" en langue anglaise est entrainé pour pouvoir détecter le changement des échantillons entrants et les classifier par exemple en trois niveaux de difficulté : bas/moyen/élevé ou "low/mid/high" en langue anglaise, respectivement pour facile à classifier, moyen à classifier, et difficile à classifier.

Lors de son fonctionnement, un module de gestion DMMS met à jour des modules de gestion DM.

Par exemple, la deuxième étape de détermination des DM a déterminé que si la pression atmosphérique baissait de 10% et que l'échantillon était moyen, il faut l'arbre de routage indicé 3 pour un DM indicé 2, alors, le module de gestion DMMS concerné met à jour le DM indicé 2 avec l'arbre de routage indicé 3.

Un exemple de structure de données d'échange d'informations particulièrement pertinent pour les échantillons de signal de ce procédé, est la structure de données suivante nommée SRS pour acronyme de "Sample Routing Structure" en langue anglaise.

Cette structure de données permet l'échange d'informations dans un algorithme d'IA de classification, et entre des algorithmes d'IA de classification à l'intérieur de l'IDS. Elle est la suivante :
[Entête][actualisation métriques][reconfiguration DM][échantillon original][échantillon intermédiaire][prédiction][chemin][complexité/drift]
Dans laquelle :
Le champ "Entête" contient des informations sur le type d'échantillon,
Le champ "actualisation métrique" contient une liste des métriques présentes dans l'algorithme courant et permet de transmettre les mises à jour de métriques dans les modules de décision DM à chaque passage d'un échantillon,
Le champ "reconfiguration DM" est généré par un module de gestion DMMS et permet de spécifier les nouvelles règles d'agissement du DM (donc le nouvel arbre de routage ou les nouveaux seuils),
Le champ "échantillon original" contient toutes les informations originales de l'échantillon et est utilisé lors d'un passage à un autre algorithme d'IA de classification incompatible avec le précédent (courant). Par exemple passage d'un réseau de neurones et d'une RandomForest.
Le champ "échantillon intermédiaire" correspond aux valeurs mises à jour par les différents traitements effectués dans l'algorithme d'IA de classification courant.

La [Fig.2] représente un exemple de système de détection d'intrusion IDS conçu par le procédé de l'invention, avec un module de décision DM, un module de gestion DMMS du module de décision DM, et deux algorithmes d'IA de classification différents.

La [Fig.3] représente un exemple de système de détection d'intrusion IDS conçu par le procédé de l'invention, avec deux modules de décision DM, un module de gestion DMMS des modules de décision DM, et deux algorithmes d'IA de classification différents, et une sortie anticipée du premier algorithme.

La [Fig.4] représente un exemple de système de détection d'intrusion IDS conçu par le procédé de l'invention, avec deux modules de décision DM, un module de gestion DMMS externe des modules de décision DM, un module de gestion DMMS interne d'un des modules de décision DM, et deux algorithmes d'IA de classification différents, et une sortie anticipée du premier algorithme.

## Revendications

1. Procédé de conception d'un système de détection d'instrusion (IDS) dans un système embarqué à bord d'un véhicule aéronautique spatial ou naval, configuré pour réaliser au moins une mission, une mission étant déterminée par des valeurs de contraintes opérationnelles comprenant une valeur (VP) de puissance utilisée par le système (IDS), et une valeur (VT) de temps d'inférence du système (IDS), le système de détection d'intrusion (IDS) comprenant l'embarquement d'une pluralité d'algorithmes d'IA de classification, comprenant :
- une première étape (E1) de détermination, par utilisation d'un algorithme d'optimisation, de l'architecture du système (IDS) comprenant au moins un module de décision (DM) et au moins un module de gestion (DMMS) du ou des modules de décision (DM), à partir :
- des caractéristiques de la plateforme du système (IDS) comprenant des métriques internes ou externes au système (IDS), des ressources de la plateforme du système (IDS) ; des types d'attaques possibles sur le système (IDS) dépendant des protocoles de communications utilisés par la plateforme du système (IDS) ;
- des types d'algorithmes d'IA de classification disponibles ; et
- des contraintes opérationnelles comprenant une limite (LP) de puissance utilisée par le système (IDS) à ne pas dépasser, une limite (LT) de temps d'inférence du système (IDS), et un niveau (NP) de précision de classification du système (IDS) désiré ; et
- une deuxième étape (E2) de détermination, pour chaque module de décision (DM), par utilisation d'un algorithme d'optimisation, d'un arbre de routage du module de décision (DM), par mission, à partir :
- de l'architecture du système (IDS) déterminé à la première étape (E1) ;
- des caractéristiques de la plateforme du système (IDS) comprenant des métriques internes ou externes au système (IDS), des ressources de la plateforme du système (IDS), des types d'attaques possibles sur le système (IDS) dépendant des protocoles de communications utilisés par la plateforme du système (IDS) ;
- des intervalles de seuils de comparaisons comprenant un ensemble de valeurs discrètes à explorer; et
- des valeurs de contraintes opérationnelles de la mission courante du véhicule, comprenant une valeur (VP) de puissance utilisée par le système (IDS), et une valeur (VT) de temps d'inférence du système (IDS) ;
un module de décision (DM) étant configuré pour stocker en mémoire l'arbre de routage de la mission courante ; et
- une troisième étape (E3) de détermination d'au moins un module de gestion (DMMS) du ou des modules de décision (DM), à partir de l'architecture du système (IDS), déterminée à la première étape configuré pour stocker en mémoire l'ensemble des arbres de décisions du ou des modules de décision (DM), et pour modifier l'arbre de routage du ou des modules de décision (DM) en cas de modification de la mission courante.

2. Procédé selon la revendication 1, dans lequel un arbre de routage est configuré pour définir le routage d'un échantillon de signal reçu par le système vers une autre branche de l'algorithme de classification en cours d'exécution, vers l'entrée d'un autre desdits algorithmes d'IA de classification, ou vers la suite de l'algorithme de classification en cours d'exécution.

3. Procédé selon l'une des revendications précédentes, dans lequel une métrique interne au système de détection d'intrusion (IDS) appartient à la liste suivante : entropie de l'échantillon de signal, patience de l'échantillon de signal, budget temporel alloué au signal, confiance dans l'algorithme d'IA de classification courant, marge de l'algorithme d'IA de classification courant.

4. Procédé selon l'une des revendications précédentes, dans lequel une métrique externe au système de détection d'intrusion (IDS) appartient à la liste suivante : niveau de batterie (NB) du véhicule, limite (LP) de puissance utilisée par le système (IDS), limite (LR) d'utilisation de ressources du véhicule, paramètre représentatif du fonctionnement du véhicule, paramètre représentatif de l'environnement du véhicule.

5. Procédé selon l'une des revendications précédentes, dans lequel au moins un module de gestion (DMMS) est interne au module de décision (DM).

6. Procédé selon l'une des revendications précédentes, dans lequel au moins un module de gestion (DMMS) est externe au module de décision (DM).

7. Procédé selon la revendication 6 en combinaison avec la revendication 4, dans lequel le module de gestion (DMMS) externe audit au moins un module de décision (DM) est compris dans un module de calcul différent du module de calcul comprenant le module de décision (DM) comprenant le module de gestion (DMMS) interne.

8. Procédé selon l'une des revendications précédentes, dans lequel l'algorithme d'optimisation est un algorithme génétique.
